# EUROPÄISCHE PATENTSCHRIFT

(11) **EP 1 620 706 B1**
(45) Veröffentlichungstag und Bekanntmachung des Hinweises auf die Patenterteilung: **23.05.2007**
(21) Anmeldenummer: 04726475.9
(22) Anmeldetag: 08.04.2004
(51) Int. Cl.: G01M 3/20

(54) **LECKSUCHGERÄT**
LEAK DETECTOR
APPAREIL DE DETECTION DE FUITES

(30) Priorität: 02.05.2003 DE 10319633
(43) Veröffentlichungstag der Anmeldung: 01.02.2006
(73) Patentinhaber: Inficon GmbH, 50968 Köln (DE)
(72) Erfinder: BÖHM, Thomas, 50859 Köln (DE); DÖBLER, Ulrich, 42929 Wermelskirchen (DE); HIRCHE, Ralf, 51109 Köln (DE); GROßE BLEY, Werner, 53125 Bonn (DE)
(74) Vertreter: Selting, Günther
(86) Internationale Anmeldenummer: PCT/EP2004/003789
(87) Internationale Veröffentlichungsnummer: WO 2004/097363

(56) Entgegenhaltungen:
- EP-A- 0 283 543
- US-A- 3 520 176
- US-A- 4 919 599

## Beschreibung

Die Erfindung betrifft ein Lecksuchgerät nach dem Gegenstromprinzip, mit einer ersten Hochvakuumpumpe, deren Eintrittsseite mit dem Einlass des Lecksuchgerätes verbunden ist, einer zweiten Hochvakuumpumpe, deren Eintrittsseite mit einem Massenspektrometer verbunden ist, einer Vorvakuumpumpe, deren Eintrittsseite mit den Austrittsseiten der beiden Hochvakuumpumpen verbunden ist, und einer den Einlass des Lecksuchgerätes mit der Vorvakuumpumpe verbindenden, ein erstes Ventil enthaltenden Umgehungsleitung.

Ein Lecksuchgerät dieser Art ist in EP 0 283 543 A1 beschrieben. Es dient dazu, Lecks in einem vakuumdichten Gerät zu erkennen. Zu diesem Zweck wird ein leichtes Prüfgas in das zu prüfende Gerät eingegeben und dieses Gerät wird in einem vakuumdichten Raum-platziert, aus dem das vorhandene Gas abgesaugt wird. Alternativ kann Prüfgas von außen auf einen Prüfling gesprüht werden, dessen Innenvolumen mit dem Einlass des Lecksuchers verbunden ist. In dem abgesaugten Gas können Bestandteile des Prüfgases mit einem Massenspektrometer erkannt und bewertet werden. Sind Prüfgasanteile vorhanden, so wird auf ein Leck in dem Gerät geschlossen. Das genannte Lecksuchgerät nach dem Gegenstromprinzip weist eine Vorvakuumpumpe und eine erste Hochvakuumpumpe auf, die in Reihe betrieben werden. Eine zweite Hochvakuumpumpe verbindet das Massenspektrometer mit der Eintrittsseite der Vorvakuumpumpe. In einer Saugphase wird der Weg über die erste Hochvakuumpumpe durch Schließen eines dieser Pumpe vorgeschalteten Ventils gesperrt und das Leerpumpen des den Prüfling enthaltenden Behälters erfolgt durch eine Umgehungsleitung, die ein Ventil enthält. Wenn der Druck im Behälter unter einen Wert von etwa 100 mbar gesunken ist, wird ein Drosselventil in der zu der ersten Hochvakuumpumpe führenden Leitung geöffnet, so dass Prüfgas durch die erste Hochvakuumpumpe strömen kann. Dringt dabei Prüfgas (Helium) in das Leitungssystem ein, so gelangt es im Gegenstrom in die zweite Hochvakuumpumpe und durch diese in das Massenspektrometer. Ist während dieser Phase Helium noch nicht vom Massenspektrometer registriert worden, beginnt eine weitere Lecksuche mit höherer Empfindlichkeit, indem die Verbindung vom Prüfling zu der ersten Hochvakuumpumpe durch ein weiteres Ventil großer Nennweite freigegeben wird. Das Vorevakuierungsventil in der Umgehungsleitung wird dabei geschlossen. Die Evakuierung des Prüflings erfolgt dann bis zu einem Druck von etwa . 10⁻⁴ mbar, wobei Leckraten in der Größenordnung von etwa 10⁻⁵ bis 10⁻¹⁰ mbar l/s festgestellt werden können.

Infolge der Ventile, die vor der Eintrittsseite der ersten Hochvakuumpumpe angeordnet sind, kann diese Pumpe ständig unter Vakuumbedingungen mit voller Drehzahl laufen. Die vorgeschalteten Ventile haben jedoch einen Strömungswiderstand und somit eine Drosselwirkung. Daher steht das volle Saugvermögen der Hochvakuumpumpe am Prüfanschluss nicht ungedrosselt zur Verfügung. Insbesondere kann das Heliumsaugvermögen der Hochvakuumpumpe nicht in vollem Umfang ausgenutzt werden, was zur Erzielung minimaler Ansprechzeiten zweckmäßig wäre.

Weitere Lecksuchgeräte nach dem Gegenstromprinzip sind in den Schriften US A 3520176 bzw. US A 4919599 offenbart.

Der Erfindung liegt die Aufgabe zugrunde, ein Lecksuchgerät nach dem Gegenstromprinzip anzugeben, das ein erhöhtes Saugvermögen für Helium am Einlass aufweist und somit kurze Ansprechzeiten hat, so dass die Lecksuche verkürzt wird.

Die Lösung dieser Aufgabe erfolgt erfindungsgemäß mit den Merkmalen des Patentanspruchs 1. Hiernach ist die erste Hochvakuumpumpe direkt und ohne ein Ventil mit dem Einlass des Lecksuchgerätes verbunden. Ein zweites Ventil - außer dem in der Umgehungsleitung enthaltenen ersten Ventil - ist zwischen der Austrittsseite der ersten Hochvakuumpumpe und der Vorvakuumpumpe vorgesehen.

Gegenüber dem geschilderten Stand der Technik bietet die Erfindung eine Reihe von Vorteilen. Es gibt kein Ventil vor dem Einlass der ersten Hochvakuumpumpe. Folglich steht diese Pumpe zu Beginn eines Pumpzyklus still und wird entweder gleichzeitig mit dem Öffnen des in der Umgehungsleitung enthaltenen ersten Ventils oder etwas später, wenn der Druck bereits gefallen ist, gestartet. Am Prüfanschluss, d.h. am Einlass des Lecksuchgerätes, steht das volle Saugvermögen der ersten Hochvakuumpumpe ungedrosselt zur Verfügung, sobald der Druck unter den maximalen Ansaugdruck dieser Pumpe gefallen ist. Damit steht insbesondere das volle Heliumsaugvermögen zur Erzielung minimaler Ansprechzeiten zur Verfügung. Die Nachweisempfindlichkeit wird nicht beeinträchtigt, da sie unabhängig vom Saugvermögen und vom Einlassdruck der ersten Hochvakuumpumpe ist. Der Helium-Leckgasstrom ist immer gleich dem aus dem Leck austretenden Strom.

Mit dem genannten zweiten Ventil gibt es zwei Betriebsweisen. Bei der ersten Betriebsweise werden das erste und das zweite Ventil gleichzeitig mit dem Start der ersten Hochvakuumpumpe geöffnet. Dadurch ergibt sich durch die erste Hochvakuumpumpe und die hierzu parallel verlaufende Umgehungsleitung ein maximales Saugvermögen der Vorvakuumpumpe mit der Folge einer minimalen Abpumpzeit. Bei der zweiten Betriebsart bleibt das zweite Ventil zunächst geschlossen, bis der Druck den viskosen Strömungsbereich verlassen hat, was bei ca. 0,1 bis 1 mbar der Fall ist. Erst dann wird die erste Hochvakuumpumpe gestartet und gleichzeitig das zweite Ventil geöffnet. Diese Betriebsart bietet einen optimalen Schutz vor Schmutz aus dem Prüfling, da dieser durch die Umgehungsleitung gepumpt wird und nicht in die erste Hochvakuumpumpe gelangt.

Die erste Hochvakuumpumpe wird bevorzugt in waagerechter Betriebsweise angeordnet, damit keine Teilchen geradewegs in ihre Eintrittsseite fallen können. Falls die Vorvakuumpumpe eine mit Öl gedichtete Pumpe ist, beispielsweise eine Drehschieberpumpe, wird der Prüfanschluss im Enddruckbereich optimal vor Ölrückströmungen geschützt.

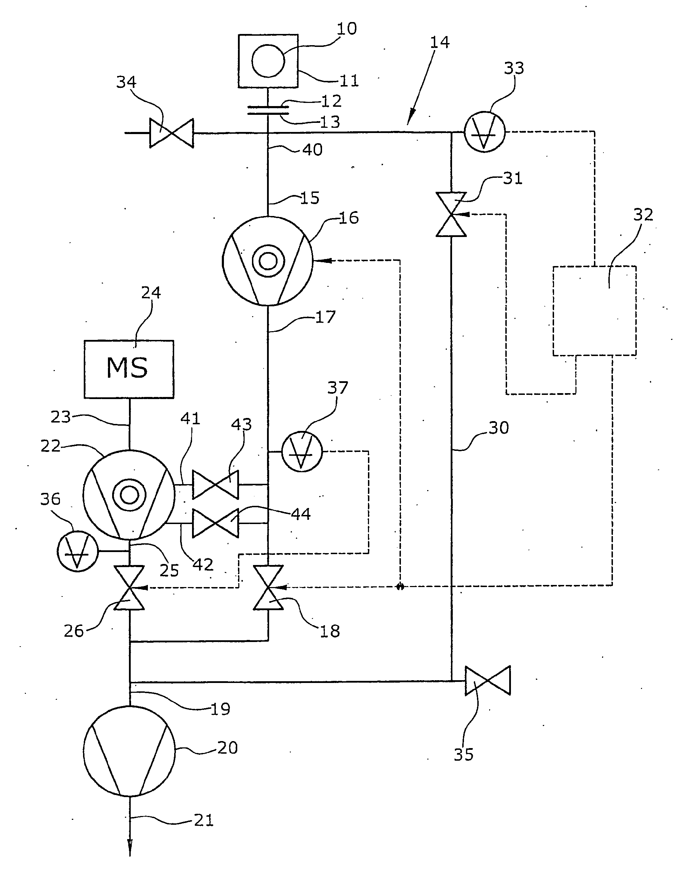

Im Folgenden wird unter Bezugnahme auf die einzige Figur der Zeichnung ein Ausführungsbeispiel der Erfindung näher erläutert.

In der Zeichnung ist ein prinzipielles Schaltbild des Lecksuchgerätes dargestellt.

Der auf Lecks zu prüfende Prüfling 10 ist mit einem Prüfgas, in der Regel Helium, gefüllt und in eine vakuumdichte Prüfkammer 11 eingesetzt. In der Prüfkammer 11 wird durch Absaugen ein Vakuum erzeugt und das die Prüfkammer verlassende Gas wird auf Heliumanteile untersucht.

An einen Anschluss 12 der Prüfkammer 11 wird der Einlass 13 des Lecksuchgerätes 14 angeschlossen. Mit dem Einlass 13 ist die Eintrittsseite 15 einer Hochvakuumpumpe 16 verbunden. Eine Hochvakuumpumpe ist im Rahmen der vorliegenden Beschreibung und der Patentansprüche eine Molekularpumpe. Eine Molekularpumpe übt Impulse auf Gasmoleküle aus und beschleunigt diese. Die Molekularpumpe arbeitet folglich nur bei niedrigen Drücken, wobei der Auslassdruck auf der Druckseite nur einige mbar beträgt. Eine typische Hochvakuumpumpe ist eine Turbomolekularpumpe, die zahlreiche Statorscheiben und Rotorscheiben aufweist, wobei die Rotorscheiben mit einer hohen Drehzahl rotieren. Eine Molekularpumpe erzeugt eine hohe Kompression nur für schwere Moleküle, jedoch eine niedrige Kompression für leichte Moleküle. Eine Molekularpumpe hat für jedes Gas ein anderes Saugvermögen. Für das leichte Gas Helium ist das Saugvermögen besonders niedrig.

Die Austrittsseite 17 der Hochvakuumpumpe 16 ist über ein noch zu erläuterndes Ventil 18 mit der Eintrittsseite 19 einer Vorvakuumpumpe 20 verbunden. Die Austrittsseite 21 der Vorvakuumpumpe führt in die Atmosphäre. Die Vorvakuumpumpe 20 ist beispielsweise eine Verdrängerpumpe, die den für den Betrieb der Hochvakuumpumpe 16 erforderlichen niedrigen Druck erzeugt.

Eine zweite Hochvakuumpumpe 22 ist mit ihrer Eintrittsseite 23 mit einem Massenspektrometer 24 verbunden, das zur Erkennung des Prüfgases Helium geeignet ist. Die Austrittsseite 25 der zweiten Hochvakuumpumpe 22 ist über ein Ventil 26 mit der Eintrittsseite der Vorvakuumpumpe 20 verbunden.

Das Prüfgas ist ein leichtes Gas, das die Hochvakuumpumpe 22 im Gegenstrom, also entgegen der Förderrichtung, passiert und zu dem Massenspektrometer 24 gelangt.

Das Lecksuchgerät weist ferner eine Umgehungsleitung 30 auf, welche den Einlass 13 mit der Eintrittsseite 19 der Vorvakuumpumpe 20 verbindet und ein erstes Ventil 31 enthält, so dass sie wahlweise geöffnet und gesperrt werden kann.

Eine Steuerung 32 steuert das erste Ventil 31 und das mit der Austrittsseite 17 der Hochvakuumpumpe 16 verbundene zweite Ventil 18 in Abhängigkeit von dem Druck am Einlass 13, welcher von einem Druckmessgerät 33 gemessen wird. Der Einlass 13 ist ferner über ein Belüftungsventil 34 mit der Atmosphäre verbunden. Ebenso ist die Eintrittsseite 19 der Vorvakuumpumpe 20 über ein Belüftungsventil 35 mit der Atmosphäre verbunden.

Der Druck an der Austrittsseite 25 der zweiten Hochvakuumpumpe 22 wird durch ein Druckmessgerät 36 gemessen. Ein weiteres Druckmessgerät 37 ist mit der Austrittsseite 17 der ersten Hochvakuumpumpe 16 verbunden. In Abhängigkeit von dem gemessenen Druck wird das Ventil 26 geöffnet, wenn der Druck einen vorbestimmten Wert unterschreitet.

Das wesentliche Merkmal der Erfindung besteht darin, dass die Leitung 40, die den Einlass 13 mit der Eintrittsseite 15 der ersten Hochvakuumpumpe 16 verbindet, völlig ungedrosselt ist und weder eine Drosselstelle noch ein Ventil enthält. Damit steht am Einlass 13 das volle Saugvermögen der Hochvakuumpumpe 16 zur Verfügung, sobald der Druck unter den maximalen Ansaugdruck der Hochvakuumpumpe gefallen ist. Dadurch werden kürzeste Ansprechzeiten für das Prüfgas Helium erreicht.

Die Absperrung des Leitungszweiges, der die erste Hochvakuumpumpe 16 enthält, erfolgt durch das zweite Ventil 18.

Bei der ersten Betriebsweise werden die Ventile 31 und 18 gleichzeitig mit dem Start der Hochvakuumpumpe 16 geöffnet. Dadurch entsteht eine minimale Abpumpzeit durch ein maximales Saugvermögen der Vorvakuumpumpe 20, sowohl durch die Hochvakuumpumpe 16 hindurch als auch durch die Umgehungsleitung 30.

Bei der zweiten Betriebsweise bleibt das Ventil 18 zunächst geschlossen, bis der Druck am Einlass 13 unter einen Grenzwert von ca. 0,1 bis 1 mbar abgefallen ist, der die Grenze des viskosen Strömungsbereichs darstellt. Erst wenn das Signal des Druckmessgerätes 33 das Unterschreiten des Grenzwertes angibt, wird die Hochvakuumpumpe 16 gestartet und gleichzeitig wird das zweite Ventil 18 geöffnet. Bei dieser Betriebsweise wird die Hochvakuumpumpe 16 während des Abpumpens von Gas vor Schmutz aus dem Prüfling geschützt, da das Gas ausschließlich durch die Umgehungsleitung 30 geleitet wird.

Die zweite Hochvakuumpumpe 22 weist zwei Zwischeneinlässe 41 und 42 auf, die jeweils über ein schaltbares Ventil 43 bzw. 44 mit der Austrittsseite 17 der ersten Hochvakuumpumpe 16 verbunden sind. Durch Schalten dieser Ventile kann der Messbereich verändert werden: Nachstehend werden Beispiele für Drücke an charakteristischen Stellen der Hochvakuumpumpe 22 angegeben:

| | |
|---|---|
| Austrittsseite 25: | 15 mbar |
| Zwischeneinlass 42: | 1 mbar |
| Zwischeneinlass 41: | 10⁻² mbar |
| Eintrittsseite 23: | 10⁻⁴ mbar. |

## Patentansprüche

1. Lecksuchgerät nach dem Gegenstromprinzip, mit einer ersten Hochvakuumpumpe (16), deren Eintrittsseite (15) mit dem Einlass (13) des Lecksuchgerätes (14) verbunden ist, einer zweiten Hochvakuumpumpe (22), deren Eintrittsseite (23) mit einem Massenspektrometer (24) verbunden ist, einer Vorvakuumpumpe (20), deren Eintrittsseite (19) mit den Austrittsseiten (17,25) der beiden Hochvakuumpumpen (16,22) verbunden ist und einer den Einlass (13) des Lecksuchgerätes mit der Vorvakuumpumpe (20) verbindenden, ein erstes Ventil (31) enthaltenden Umgehungsleitung (30),
wobei die erste Hochvakuumpumpe (16) ungedrosselt und ohne ein Ventil mit dem Einlass (13) des Lecksuchgerätes (14) verbunden ist und ein zweites Ventil (18) zwischen der Austrittsseite (17) der ersten Hochvakuumpumpe (16) und der Eintrittsseite der Vorvakuumpumpe (20) vorgesehen ist.

2. Lecksuchgerät nach Anspruch 1, **dadurch gekennzeichnet, dass** Mittel vorhanden sind, wodurch die erste Hochvakuumpumpe (16) beim Öffnen des ersten Ventils (31) zugleich mit dem Öffnen des zweiten Ventils (18) in Betrieb gesetzt wird.

3. Lecksuchgerät nach Anspruch 1, **dadurch gekennzeichnet, dass** Mittel vorhanden sind, wodurch die erste Hochvakuumpumpe (16) erst nach dem Öffnen des ersten Ventils (31) in Betrieb gesetzt wird, wenn der Druck am Einlass (13) den viskosen Strömungsbereich verlassen hat bzw. unter einen Grenzwert abgefallen ist.

4. Lecksuchgerät nach einem der Ansprüche 1-3, **dadurch gekennzeichnet, dass** die zweite Hochvakuumpumpe (22) mindestens einen Zwischeneinlass (41,42) aufweist, der über ein Ventil (43,44) mit der Austrittsseite (17) der ersten Hochvakuumpumpe (16) verbunden ist, wobei dieses Ventil in Abhängigkeit von dem Druck der Austrittsseite der ersten Hochvakuumpumpe (16) gesteuert ist.

## Claims

1. Leak detector according to the counterflow principle, comprising a first high vacuum pump (16), the entry side (15) of which is connected to the inlet (13) of the leak detector (14), a second high vacuum pump (22), the entry side (23) of which is connected to a mass spectrometer (24), a primary pump (20) the entry side (19) of which is connected to the exit sides (17,25) of the two high vacuum pumps (16,22), and a bypass (30) connecting the inlet (13) of the leak detector to the primary pump (20) and including a first valve (31), wherein the first high vacuum pump (16) is connected to the inlet (13) of the leak detector (14) in a non-throttled manner and without any valve, and a second valve (18) is provided between the exit side (17) of the first high vacuum pump (16) and the inlet side of the primary pump (20).

2. Leak detector according to claim 1, **characterized in that** means are provided whereby the first high vacuum pump (16) is started simultaneously with the opening of the second valve (18) upon opening the first valve (31).

3. Leak detector according to claim 1, **characterized in that** means are provided whereby the first high vacuum pump (16) is activated only after the first valve (31) has been opened when the pressure at the inlet (13) has left the viscous flow range or fallen below a limit value.

4. Leak detector according to one of claims 1 - 3, **characterized in that** the second high vacuum pump (22) comprises at least one intermediate inlet (41,42) connected to the exit side (17) of the first high vacuum pump (16) via a valve (43,44), this valve being controlled in dependence on the pressure of the exit side of the first high vacuum pump (16).

## Revendications

1. Détecteur de fuites travaillant selon le principe à contre-courant, comprenant une première pompe à vide poussé (16) dont le côté d'entrée (15) est relié à l'admission (13) du détecteur de fuites (14), une deuxième pompe à vide poussé (22) dont le côté d'entrée (23) est relié à un spectromètre de masse (24), une pompe à vide préliminaire (20) dont le côté d'entrée (19) est relié aux côtés des sortie (17, 25) des deux pompes à vide poussé (16, 22), et une conduite de dérivation (30) reliant l'admission (13) du détecteur de fuites à la pompe à vide préliminaire (20) et contenant une première soupape (31), la première pompe à vide poussé (16) étant reliée sans étranglement et sans soupape à l'admission (13) du détecteur de fuites (14), et une deuxième soupape (18) étant prévue entre le côté de sortie (17) de la première pompe à vide poussé (16) et le côté d'entrée de la pompe à vide préliminaire (20).

2. Détecteur de fuites selon la revendication 1, **caractérisé en ce que** des moyens sont prévus qui permettent la mise en marche de la première pompe à vide poussé (16) lors de l'ouverture de la première soupape (31) en même temps que l'ouverture de la deuxième soupape ('18).

3. Détecteur de fuites selon la revendication 1, **caractérisé en ce que** des moyens sont prévus qui ne permettent la mise en marche de la première pompe à vide poussé (16) qu'après l'ouverture de la première soupape (31), lorsque la pression au niveau de l'admission (13) a quitté la zone d'écoulement visqueuse ou est tombée en dessous d'une valeur limite.

4. Détecteur de fuites selon l'une quelconque des revendications 1 à 3, **caractérisé en ce que** la deuxième pompe à vide poussé (22) présente au moins une admission intermédiaire (41, 42) qui est reliée par une soupape (43, 44) au côté de sortie (17) de la première pompe à vide poussé (16), cette soupape étant commandée en fonction de la pression du côté de sortie de la première pompe à vide poussé (16).
